# EUROPÄISCHE PATENTSCHRIFT

(11) **EP 4 051 546 B1**
(45) Veröffentlichungstag und Bekanntmachung des Hinweises auf die Patenterteilung: **10.09.2025**
(21) Anmeldenummer: 20790216.4
(22) Anmeldetag: 05.10.2020
(51) Int. Cl.: B60T 7/04, B60T 13/66, G05G 1/38, B60T 17/22

(54) **FUSSBREMSMODUL EINER ELEKTROPNEUMATISCHEN BREMSANLAGE EINES KRAFTFAHRZEUGS**
FOOT BRAKE MODULE OF AN ELECTROPNEUMATIC BRAKE SYSTEM OF A MOTOR VEHICLE
MODULE DE FREIN À PIED D'UN SYSTÈME DE FREINAGE ÉLECTROPNEUMATIQUE D'UN VÉHICULE AUTOMOBILE

(30) Priorität: 29.10.2019 DE 102019129153
(43) Veröffentlichungstag der Anmeldung: 07.09.2022
(73) Patentinhaber: ZF CV Systems Europe BV, 1170 Brüssel (BE)
(72) Erfinder: ADAMSKI, Krzysztof, 53205 Wroclaw (PL); MÜNTEFERING, Dirk, 30900 Wedemark (DE); OTREMBA, Robert, 30952 Ronnenberg (DE); RIEDIGER-JANISCH, Karl-Heinz, 30455 Hannover (DE); LESIK, Pawel, 54130 Wroclaw (PL)
(74) Vertreter: Ohlendorf, Henrike
(86) Internationale Anmeldenummer: PCT/EP2020/077817
(87) Internationale Veröffentlichungsnummer: WO 2021/083615

(56) Entgegenhaltungen:
- DE-A1- 102007 035 326
- DE-B3- 102014 013 756
- DE-C5- 102014 013 756
- US-A1- 2002 046 616
- US-A1- 2018 001 879

## Beschreibung

Die Erfindung betrifft ein Fussbremsmodul einer elektropneumatischen Bremsanlage eines Kraftfahrzeugs mit mindestens zwei pneumatischen Bremskreisen, welches mittels eines Bremspedals betätigbar ist, und welches einen pneumatischen Teil mit einem pneumatischen Bremssteuerventil sowie einen elektrischen Teil mit mindestens einem elektrischen Schalter und wenigstens einem elektronischen Wegsensor aufweist.

Bei einer elektropneumatischen Bremsanlage eines Kraftfahrzeugs ist die Höhe der Bremsdrücke in den beiden Bremskreisen wahlweise elektronisch oder pneumatisch steuerbar. Üblicherweise erfolgt die Steuerung der Bremsdrücke im Normalbetrieb elektronisch und wird erst beim Auftreten einer Störung in der elektronischen Bremssteuereinrichtung auf die pneumatische Steuerung umgeschaltet.

In einem pneumatischen Bremssteuerventil wird in Abhängigkeit vom Stellweg eines mit dem Bremspedal des Kraftfahrzeugs in Stellverbindung stehenden Stößels aus einem eingangsseitig anliegenden Vorratsdruck ein Bremssteuerdruck eingestellt, welcher als Vorsteuerdruck in ein pneumatisches Relaisventil des betreffenden Bremskreises eingeleitet und dort in einen in den zugeordneten Radbremszylindern wirksamen Bremsdruck umgesetzt wird.

Der erwähnte elektrische Schalter ist elektromechanisch wirksam und steht über einen Nocken oder ein anderes Bauteil mit dem Stößel des Fussbremsmoduls in Stellverbindung. Bei einer Betätigung des Bremspedals wird der Schalter nach der Überwindung eines Leerweges betätigt, wodurch ein beginnender Bremsvorgang erkannt und bei ausgeschaltetem elektrischem Bordnetz beziehungsweise ausgeschalteter Zündung des Kraftfahrzeugs die elektronische Steuerung der Bremsdrücke aktiviert wird. Des Weiteren wird die Stellposition des Stößels bei der Betätigung des Schalters auch als Referenzposition für den erwähnten elektronischen Wegsensor genutzt.

Der elektronische Wegsensor ist üblicherweise berührungslos wirksam und wird durch einen ferromagnetischen oder permanentmagnetischen Signalgeber, der unmittelbar oder mittelbar an dem Stößel befestigt ist, induktiv oder magnetisch beeinflusst. Der Wegsensor dient als Bremswertgeber und misst den Bremsstellweg des Stößels, der zum Beispiel in Form eines pulsweitenmodulierten Signals an ein elektronisches Steuergerät der elektronischen Bremssteuereinrichtung weitergeleitet wird. Von dem elektronischen Steuergerät wird ein entsprechender Steuerstrom in ein elektromagnetisches Relaisventil des betreffenden Bremskreises eingeleitet und dort in einen in den zugeordneten Radbremszylindern wirksamen Bremsdruck umgesetzt.

Im Vergleich mit einer pneumatischen Steuerung der Bremsdrücke hat die elektronische Steuerung der Bremsdrücke den Vorteil eines schnelleren Ansprechverhaltens auf eine geänderte Betätigungsstellung des Bremspedals und einer genaueren Dosierung der Bremsdrücke beziehungsweise der wirksamen Bremskräfte.

In der Druckschrift Nr. 815_268 der WABCO Standard GmbH mit dem Titel "EBS - Elektronisch geregeltes Bremssystem im Reisebus O 580" sind der Aufbau und die Wirkungsweise einer elektropneumatischen Bremsanlage sowie eines Fussbremsmoduls der Baureihe WABCO 480 002 xxx 0 beschrieben. Das dort als Bremswertgeber bezeichnete Fussbremsmodul weist einen pneumatischen Teil mit zwei pneumatischen Bremssteuerventilen sowie einen elektrischen Teil mit einem elektrischen Schalter und zwei elektronischen Wegsensoren auf. Die Bremssteuerventile und die Wegsensoren sind jeweils einem anderen der beiden Bremskreise zugeordnet. Die Stellwegsignale der Wegsensoren werden als pulsweitenmodulierte Signale an ein Zentralmodul der elektronischen Bremssteuereinrichtung übermittelt.

In der Druckschrift Nr. 815 020 208 3 der WABCO Standard GmbH mit dem Titel "EBS3 - Elektronisches Bremssystem" sind der Aufbau und die Wirkungsweise mehrerer Ausführungsformen einer elektropneumatischen Bremsanlage und eines Fussbremsmoduls der Baureihe WABCO 480 003 xxx 0 beschrieben. Das dort als Bremswertgeber bezeichnete Fussbremsmodul weist einen pneumatischen Teil mit zwei pneumatischen Bremssteuerventilen sowie einen elektrischen Teil mit einem elektrischen Schalter und zwei elektronischen Wegsensoren auf. Die Bremssteuerventile und die Wegsensoren sind jeweils einem anderen der beiden Bremskreise zugeordnet. Die Stellwegsignale der Wegsensoren werden als pulsweitenmodulierte Signale an ein Zentralmodul der elektronischen Bremssteuereinrichtung weitergeleitet.

In der DE 10 2014 010 815 A1 der Anmelderin ist ein dort als elektropneumatisches Regelventil bezeichnetes Fussbremsmodul mit zwei pneumatischen Bremssteuerventilen, einem elektrischen Schalter und einem elektronischen Wegsensor beschrieben. Der Schalter und der Wegsensor sind in einem Elektronikgehäuse angeordnet, das seitlich an dem Gehäuse des Fussbremsmoduls befestigt ist. Der Schalter ist über einen schwenkbar gelagerten Winkelhebel von einer an dem Stößel befestigten Druckplatte betätigbar. Der Wegsensor wird von einem zwischen dem Gehäuse des Fussbremsmoduls und dem Elektronikgehäuse längsverschiebbar geführten sowie an der Druckplatte befestigten Signalgeber beeinflusst. Eine Auswertungselektronik, in der das Sensorsignal des Wegsensors in ein pulsweitenmoduliertes Signal gewandelt wird, ist unmittelbar benachbart zu dem Schalter und dem Wegsensor in dem Elektronikgehäuse angeordnet.

Bislang handelt es sich bei den Wegsensoren um sogenannte AMR-Sensoren (AMR-Effekt = anisotroper magnetoresistiver Effekt), von denen nicht die Änderung der Feldstärke eines Magnetfeldes sondern die Richtungsänderung eines Magnetfeldes sensiert wird, und deren Auswertungselektronik, wie in dem zuvor beschriebenen Fussbremsmodul, separat in der Nähe der Sensoren angeordnet ist.

US2018001879A1 betrifft ein elektronisches Bremssystem für eine Bremsanlage eines Nutzfahrzeugs, mit einem Bremswertgeber, welcher wenigstens einen Sensor zum Erfassen von Stellungen eines durch den Fahrer des Nutzfahrzeugs betätigbaren Bremspedals und wenigstens ein über das Bremspedal mechanisch betätigbares Ventil aufweist.

US2002046616A1 offenbart ein Verfahren zur Erzeugung von Kick- Down-Signalen für eine Automatikschaltvorrichtung durch eine Fahrpedal-Vorrichtung mit wenigstens einem Pedalelement, das in wenigstens einem Drehpunkt zu bewegen und mit wenigstens einem Bewegungssensorelement zu verstellen ist.

DE102014013756B3 betrifft eine elektrische Ausrüstung eines Fahrzeugs mit einer wenigstens teilweise elektrischen Brems- und Lenkeinrichtung beinhaltend eine elektrische oder elektro-mechanische Lenkeinrichtung mit oder ohne durchgehende mechanische Verbindung zwischen einem Lenkrad und einem Lenkgetriebe sowie mit einer elektronischen Lenksteuereinrichtung und einem elektrischen Lenksteller.

DE102007035326A1 offenbart eine Bremsvorrichtung, insbesondere eine elektrisch betätigte Bremsvorrichtung für Kraftfahrzeuge, umfassend einen Bremspedalsensor zum Aufnehmen eines an einem Bremspedal ausgeübten Bremswunsches und ein mit dem Bremspedalsensor verbundenes Steuergerät, wobei wenigstens zwei Bremspedalsensoren vorgesehen sind, die jeweils einem Steuergerät zugeordnet sind, und dass die Steuergeräte über eine Datenverbindung miteinander verbunden sind.

Ausgehend von den beschriebenen Ausführungsformen der bekannten Fussbremsmodule lag der vorliegenden Erfindung die Aufgabe zugrunde, ein Fussbremsmodul einer elektropneumatischen Bremsanlage der eingangs genannten Bauart anzugeben, das ohne eine Einschränkung der Betriebssicherheit der Bremsanlage möglichst verschleißarm, einfach, kostengünstig und platzsparend aufgebaut ist.

Diese Aufgabe ist Aufgabe ist durch ein Fussbremsmodul mit den Merkmalen des Anspruchs 1 gelöst. Vorteilhafte Weiterbildungen dieses Fussbremsmodul sind in den abhängigen Ansprüchen definiert.

Demnach betrifft die Erfindung ein Fussbremsmodul einer elektropneumatischen Bremsanlage eines Kraftfahrzeugs mit mindestens zwei pneumatischen Bremskreisen, welches mittels eines Bremspedals betätigbar ist, und welches einen pneumatischen Teil mit einem pneumatischen Bremssteuerventil sowie einen elektrischen Teil mit mindestens einem elektrischen Schalter und wenigstens einem elektronischen Wegsensor aufweist.

Zur Lösung der gestellten Aufgabe ist bei diesem Fussbremsmodul vorgesehen, dass der elektrische Schalter berührungslos wirksam ist, und dass das Fussbremsmodul zwei Wegsensoren aufweist, wobei die zwei Wegsensoren jeweils eine separate Stromversorgung aufweisen sowie an unterschiedliche elektronische Steuergeräte angeschlossen sind.

Durch die berührungslos wirksame Ausbildung des Schalters ist dieser weitgehend verschleißfrei und weist demzufolge eine hohe Standzeit auf. Durch die jeweils separate Stromversorgung und den Anschluss an unterschiedliche elektronische Steuergeräte können die Wegsensoren unabhängig voneinander betrieben sowie deren Sensorsignale unabhängig voneinander ausgewertet werden. Dies erzeugt den Vorteil, dass die beiden Wegsensoren redundant zueinander nutzbar sind, sodass beim Ausfall eines dieser beiden Wegsensoren die Sensordaten des anderen Wegsensors zur Steuerung der Relaisventile eines oder mehrere Bremskreise eines Fahrzeugs zur Verfügung stehen. Zudem kann wegen der separaten Stromversorgung und gerätetechnisch separaten Auswertung der Sensorsignale der beiden Wegsensoren auf eines von zwei Bremssteuerventilen verzichtet werden, ohne dass die Betriebssicherheit der Bremsanlage des Fahrzeugs dadurch reduziert wird. Schließlich verbessert die Nutzung von zwei Steuergeräten die Betriebssicherheit des Bremssystems weiter.

Der erwähnte Schalter des Fussbremsmoduls ist bevorzugt magentfeldsensitiv wirksam und kann wahlweise als ein Reed-Schalter oder als ein Hall-Sensor ausgebildet sein, dem als Signalgeber jeweils ein unmittelbar oder mittelbar an einem mit dem Bremspedal in Stellverbindung befindlichen Stößel befestigter einziger gemeinsamer Permanentmagnet zugeordnet ist. Bei einem Reed-Schalter sind Kontaktzungen aus einer Nickel-Eisen-Legierung in einem Glasrohr eingeschmolzen, welche durch ein veränderliches Magnetfeld betätigt, nämlich miteinander kontaktiert oder voneinander getrennt werden. Ein Hall-Sensor nutzt den sogenannten Hall-Effekt aus, bei dem in einem stromdurchflossenen Leiter, der sich in einem stationären Magnetfeld befindet, senkrecht zum Stromfluss und zur Magnetfeldrichtung die sogenannte Hall-Spannung auftritt. Bei einem veränderlichen Magnetfeld ändert sich die Hall-Spannung entsprechend. Das veränderliche Magnetfeld entsteht bei einer Betätigung des Bremspedals durch das an dem jeweiligen Sensor vorbeigeführte Magnetfeld des an dem Stößel befestigten einzigen, gemeinsamen Permanentmagneten.

Weiter kann vorgesehen sein, dass der erwähnte Schalter und die zwei Wegsensoren mittels nur eines einzigen, gemeinsamen Permanentmagneten betätigbar sind, welcher an dem Stößel befestigt ist. Hierdurch lassen sich die Herstellkosten des Fussbremsmoduls reduzieren.

Auch der wenigstens eine Wegsensor von den zwei Wegsensoren ist bevorzugt als ein Hall-Sensor ausgebildet, dem als Signalgeber ein unmittelbar oder mittelbar an einem mit dem Bremspedal in Stellverbindung befindlichen Stößel befestigter einziger gemeinsamer Permanentmagnet zugeordnet ist.

Zur Erzielung eines störungsfreien Betriebs und kompakter Abmessungen kann gemäß einer anderen Weiterbildung der Erfindung vorgesehen sein, dass auf einem Sensorchip des Wegsensors eine zugeordnete Auswertungselektronik angeordnet ist, in welcher der gemessene Messwert des jeweiligen Wegsensors in ein digitales Datenübertragungssignal umwandelbar ist. Dieses Datenübertragungssignal kann beispielsweise ein pulsweitenmoduliertes Signal sein, es sind aber auch andere Datenübertragungsformen möglich.

Gemäß einer ersten Ausführungsvariante des beschriebenen erfindungsgemäßen Fussbremsmoduls ist vorgesehen, dass in diesem außer einem elektrischen Schalter zwei elektronische Wegsensoren sowie ein pneumatisches Bremssteuerventil vorhanden sind, und dass die Sensorsignale der beiden elektronischen Wegsensoren nach deren Auswertung in dem jeweils zugeordneten Steuergerät zur Steuerung von mindestens einem pneumatischen Bremskreises nutzbar sind.

Bei der angesprochenen Auswertung der Sensorsignale der beiden Wegsensoren ist es möglich, dass aus diesen Sensorsignalen zwei Stellwegwerte ermittelt werden, und dass mittels diesen beiden Stellwegwerten durch Bildung eines arithmetischen Mittelwertes die Genauigkeit des für die Bremsdruckeinstellung vorgesehenen Stellwegwertes verbessert ist. Dieser gemittelte Stellwegwert wird dann zur Ansteuerung der Relaisventile eines oder mehrerer Bremskreise eines Fahrzeugs genutzt.

Die Steuerung eines oder beider Bremskreise eines Fahrzeugs kann auf eine pneumatische Steuerung über das vorhandene einzige Bremssteuerventil umgeschaltet werden, sofern die beiden elektronischen Wegsensoren defekt sind oder unplausible Werte liefern. Demnach ist bei einem Ausfall der elektronischen Steuerungen beider Bremskreise die pneumatische Steuerung aktiviert, sodass das betreffende Fahrzeug über diesen Bremskreis und dessen pneumatische Steuerung mittels des vorhandenen Bremssteuerventils noch sicher abgebremst werden kann. Durch das Weglassen des bisher genutzten zweiten pneumatischen Bremssteuerventils sind Material- und Herstellungskosten eingespart, und aufgrund einer reduzierten Bauhöhe des Gehäuses sind die Abmessungen des Fussbremsmoduls reduziert.

Gemäß einer zweiten Ausführungsvariante des beschriebenen nicht erfindungsgemäßen Fussbremsmoduls ist vorgesehen, dass in diesem außer einem elektrischen Schalter nur ein elektronischer Wegsensor und nur ein pneumatisches Bremssteuerventil vorhanden sind, und dass die Sensorsignale des nur einen Wegsensors nach deren Auswertung in dem zugeordneten Steuergerät zur Steuerung von mindestens einem pneumatischen Bremskreises nutzbar sind.

Bei einem Ausfall der elektronischen Steuerung für einen oder mehrere Bremskreise wird die pneumatische Steuerung aktiviert, sodass das betreffende Fahrzeug mittels des vorhandenen einzigen Bremssteuerventils noch sicher abgebremst werden kann. Durch das Weglassen eines zweiten elektronischen Wegsensors und eines zweiten pneumatischen Bremssteuerventils im Vergleich zu bekannten Fussbremsmodulen sind Material- und Herstellungskosten eingespart und aufgrund einer reduzierten Bauhöhe des Gehäuses die Abmessungen des Fussbremsmoduls reduziert.

Die Erfindung wird nachstehend anhand von drei in der beigefügten Zeichnung dargestellten Ausführungsbeispielen näher erläutert. In der Zeichnung zeigt
Fig. 1 eine erste Ausführungsform eines erfindungsgemäßen Fussbremsmoduls in einer schematischen Ansicht,
Fig. 2 eine zweite Ausführungsform eines nicht erfindungsgemäßen Fussbremsmoduls in einer schematischen Ansicht, und
Fig. 3 ein bekanntes Fussbremsmodul in einer schematischen Ansicht.

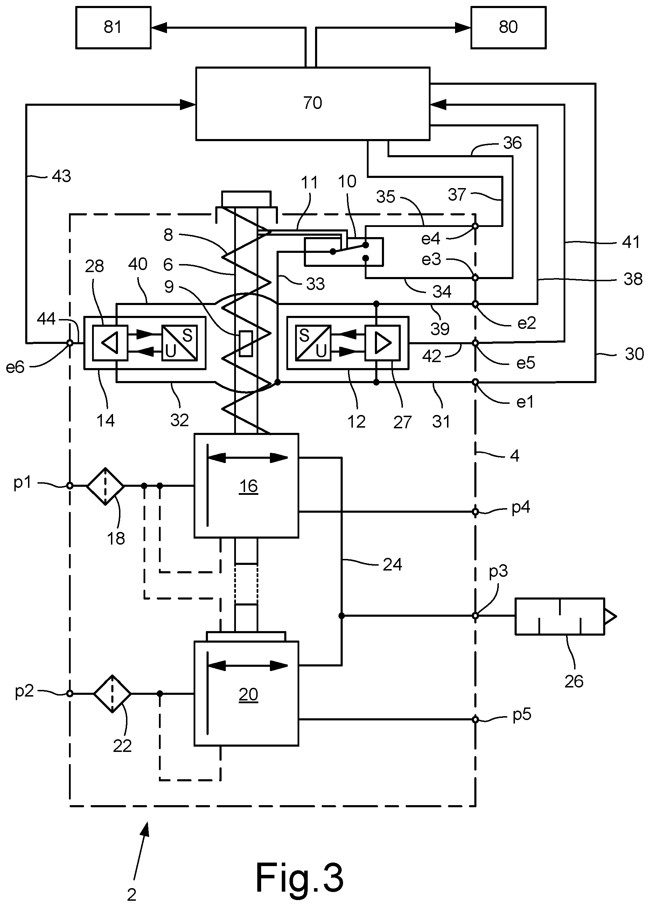

In Fig. 3 ist in einer schematischen Ansicht ein zum Beispiel aus der eingangs genannten WABCO-Druckschrift Nr. 815 020 208 3 bekanntes, mittels eines Bremspedals betätigbaren Fussbremsmoduls 2 einer elektropneumatischen Bremsanlage für ein Fahrzeug mit mindestens zwei pneumatischen Bremskreisen abgebildet. Das Fussbremsmodul 2 weist einen pneumatischen Teil mit zwei pneumatischen Bremssteuerventilen 16, 20 sowie einen elektrischen Teil mit einem elektrischen Schalter 10 und zwei elektronischen Wegsensoren 12, 14 auf, welche in einem gemeinsamen Gehäuse 4 angeordnet sind. Die beiden Bremssteuerventile 16, 20 sind von einem nicht abgebildeten Bremspedal über einen Stößel 6 gegen die Rückstellkraft einer als Schraubenfeder ausgebildeten Druckfeder 8 betätigbar.

Das erste Bremssteuerventil 16 weist eingangsseitig einen mit einem ersten Filterelement 18 versehenen pneumatischen Anschluss p1 für eine Vorratsdruckleitung des ersten Bremskreises und ausgangsseitig einen pneumatischen Anschluss p4 für eine Bremssteuerleitung des ersten Bremskreises auf. Zudem führt eine ausgangsseitig an das erste Bremssteuerventil 16 angeschlossene Entlüftungsleitung 24 zu einem pneumatischen Entlüftungsausgang p3, der über einen Schalldämpfer 26 mit der Umgebung verbunden ist. Das zweite Bremssteuerventil 20 weist eingangsseitig einen mit einem zweiten Filterelement 22 versehenen pneumatischen Anschluss p2 für eine Vorratsdruckleitung des zweiten Bremskreises und ausgangsseitig einen pneumatischen Anschluss p5 für eine Bremssteuerleitung des zweiten Bremskreises auf. Zudem führt die ausgangsseitig auch an das zweite Bremssteuerventil 20 angeschlossene Entlüftungsleitung 24 zu dem pneumatischen Entlüftungsausgang p3.

Mit zunehmendem Niederdrücken des Bremspedals, das eine Verschiebung des Stößels 6 in Richtung zu den beiden Bremssteuerventilen 16, 20 (in Fig. 3 nach unten) bewirkt, wird mittels der beiden Bremssteuerventile 16, 20 ein zunehmend hoher Bremssteuerdruck an den ausgangsseitigen pneumatischen Anschlüssen p4, p5 eingestellt. Diese Bremssteuerdrücke werden bei der pneumatischen Steuerung der Bremsdrücke in jeweils einem pneumatischen Relaisventil 80, 81 der beiden Bremskreise in den in den Radbremszylindern des jeweiligen Bremskreises wirksamen Bremsdruck umgewandelt. Die Leitungsverbindungen von den beiden ausgangsseitigen pneumatischen Anschlüssen p4, p5 des Fußbremsmoduls 2 zu den jeweils zugeordneten Relaisventilen 80, 81 sind der besseren Übersichtlichkeit halber nicht gesondert dargestellt, dem Fachmann aber an sich bekannt.

Dem entsprechend werden bei einem Lösen des Bremspedals, das eine Verschiebung des Stößels 6 weg von den Bremssteuerventilen 16, 20 (in Fig. 3 nach oben) bewirkt, bei einer pneumatischen Steuerung die Bremssteuerdrücke an den ausgangsseitigen pneumatischen Anschlüssen p4, p5 wieder reduziert, welches in den zugeordneten Relaisventilen 80, 81 der beiden Bremskreise zu niedrigeren, in den zugeordneten Radbremszylindern wirksamen Bremsdrücken führt.

Das Fußbremsmodul 2 weist mehrere elektrische Anschlüsse e1 bis e6 auf, an welche externe elektrische Leitungen 30, 36, 37, 38, 41, 43 angeschlossen sind. Diese externen elektrischen Leitungen 30, 36, 37, 38, 41, 43 sind mit einem gemeinsamen Steuergerät 70 verbunden, welches einerseits für die Stromversorgung aller elektrischen Bauteile des Fußbremsventils 2 dient, andererseits aber auch für den Empfang sowie die Auswertung von Schaltsignalen und Sensorsignalen des Fußbremsmoduls 2 zuständig ist. Unter Nutzung der genannten empfangenen Informationen dient das gemeinsame Steuergerät 70 schließlich zur elektrischen Steuerung der beiden genannten Relaisventile 80, 81, welche an den nicht dargestellten Radbremszylindern des Fahrzeugs die erforderlichen Bremsdrücke einstellen.

So weist das in Fig. 3 dargestellte bekannte Fußbremsmodul 2 einen ersten elektrischen Eingangsanschluss e1 für die Spannungsversorgung von zwei Wegsensoren 12, 14 und einen elektrischen Schalter 10 auf. An diesem ersten elektrischen Eingangsanschluss e1 ist eine erste externe Spannungsversorgungsleitung 30 angeschlossen, welche von dem gemeinsamen Steuergerät 70 mit einer ausreichend hohen elektrischen Spannung beaufschlagt wird. Diese zugeführte elektrische Spannung wird über einen ersten internen Leitungszweig 31 einer Auswerteelektronik 27 des ersten Wegsensors 12 und über einen zweiten internen Leitungszweig 32 einer Auswerteelektronik 28 des zweiten Wegsensors 14 zugeführt. Außerdem führt ein dritter interner Leitungszweig 33 der Spannungsversorgung von dem ersten internen Leitungszweig 31 zu dem schon erwähnten Schalter 10. Der elektrische Schalter 10 ist bei diesem bekannten Fußbremsmodul 2 elektromechanisch wirksam und wird mittels eines nur schematisch dargestellten, an dem Stößel 6 angeordneten Nockens 11 betätigt.

Zudem ist an dem bekannten Fußbremsmodul 2 ein zweiter elektrischer Eingangsanschluss e2 für das elektrische Masse-Potential (GND) vorhanden, an welchem eine zweite externe Spannungsversorgungsleitung 38 angeschlossen ist. Diese zweite externe Spannungsversorgungsleitung 38 ist mit dem gemeinsamen Steuergerät 70 verbunden und wird von dieser mit dem elektrischen Masse-Potential beaufschlagt. An den zweiten elektrischen Eingangsanschluss e2 für das elektrische Masse-Potential sind innerhalb des Fußbremsmoduls 2 eine erste interne Spannungsversorgungsleitung 39 für das Masse-Potential und eine zweite interne Spannungsversorgungsleitung 40 für das Masse-Potential angeschlossen, welche die Auswerteelektroniken 27, 28 der beiden Wegsensoren 12, 14 an das Masse-Potential anschließen.

Die Auswerteelektronik 27 des ersten Wegsensors 12 ist über eine interne erste Wegsignalleitung 42 mit einen Ausgangsanschluss e5 für den ersten Wegsensor 12 am Fußbremsmodul 2 verbunden, und die Auswerteelektronik 28 des zweiten Wegsensors 14 steht über eine interne zweite Wegsignalleitung 44 mit einem Ausgangsanschluss e6 für den zweiten Wegsensor 14 am Fußbremsmodul 2 in Verbindung. An diese beiden Ausgangsanschlüsse e5, e6 ist jeweils eine erste externe Wegsignalleitung 41 beziehungsweise eine zweite externe Wegsignalleitung 43 angeschlossen. Über diese beiden externen Wegsignalleitung 41, 43 werden die Sensorsignale der beiden Wegsensoren 12, 14 an das gemeinsame Steuergerät 70 gesendet.

Der Schalter 10 des Fußbremsmoduls 2 weist zwei mit elektrischer Spannung beaufschlagbare Kontaktstellen auf, welche über eine erste interne Schaltsignalleitung 34 mit einem ersten Schalterausgangsanschluss e3 beziehungsweise über eine zweite interne Schaltsignalleitung 35 mit einem zweiten Schalterausgangsanschluss e4 am Fußbremsmodul 2 verbunden sind. An diesen beiden Schalterausgangsanschlüssen e3, e4 ist jeweils eine erste externe Schaltersignalleitung 36 für das Schaltsignal beziehungsweise eine zweite externe Schaltersignalleitung 37 für das Schaltsignal des Schalters 10 angeschlossen.

Wie der geschilderte Schaltplan des Fußbremsmoduls 2 verdeutlicht, liegt in Abhängigkeit von der Axialstellung des Stößels 10 eine elektrische Spannung an einem der beiden Schalterausgangsanschlüsse e3, e4 an. Hierdurch wird dem gemeinsamen Steuergerät 70 die Information darüber gegeben, ob das Fußbremsmodul 2 von einer Person mittels des Stößels 6 betätigt wird oder nicht. Demnach wird bei einer Betätigung des Bremspedals und des Stößels 6 der Schalter 10 nach der Überwindung eines Leerweges in seine zweite Schließstellung gebracht. Hierdurch wird in dem gemeinsamen Steuergerät 70 ein beginnender Bremsvorgang erkannt und bei ausgeschaltetem Bordnetz beziehungsweise ausgeschalteter Zündung des Kraftfahrzeugs die elektronische Steuerung der Bremsdrücke aktiviert. Das gemeinsame Steuergerät 70 wird dadurch quasi aufgeweckt. Des Weiteren wird die Stellposition des Stößels 6 bei der Betätigung des Schalters 10 auch als Referenzposition für die elektronischen Wegsensoren 12, 14 genutzt.

Die elektronischen Wegsensoren 12, 14 dienen als Bremswertgeber und können den beiden Bremskreisen oder jeweils einem anderen der beiden Bremskreise zugeordnet sein. Bei diesem bekannten Fussbremsmodul 2 sind die beiden Wegsensoren 12, 14 als berührungslos wirksame AMR-Sensoren (AMR-Effekt = anisotroper magnetoresistiver Effekt) ausgebildet und messen den Bremsstellweg des Stößels 6. Als Signalgeber für die beiden Wegsensoren 12, 14 dient ein Permanentmagnet 9, der an dem Stößel 6 befestigt ist. Das Rohsignal der Wegsensoren 12, 14 wird jeweils in der auf einer Platine angeordneten Auswertungselektronik 27, 28 in ein pulsweitenmoduliertes Signal umgewandelt, welches über die Ausgangsanschlüsse e5, e6 an das gemeinsame Steuergerät 70 einer elektronischen Bremssteuereinrichtung weitergeleitet wird. Von dem gemeinsamen Steuergerät 70 werden dann entsprechende Steuerströme in die bereits erwähnten, zugeordneten elektromagnetischen Relaisventile 80, 81 der jeweiligen Bremskreise eingeleitet und dort in einen in den zugeordneten Radbremszylindern wirksamen Bremsdruck umgesetzt.

Im Normalbetrieb erfolgt die Steuerung der Bremsdrücke elektronisch und wird erst beim Auftreten einer Störung in der elektronischen Bremssteuereinrichtung auf die pneumatische Steuerung umgeschaltet. Nachteilig an diesem bekannten Fussbremsmodul 2 sind die elektromechanische Ausführung des Schalters 10, welche einen mechanischen Verschleiß unterworfen ist, die gemeinsame Stromversorgung der Wegsensoren 12, 14, welche bei einer Störung in der Steuerelektronik zum Ausfall beider Wegsensoren 12, 14 führt, sowie das Vorhandensein der beiden Bremssteuerventile 16, 20, obwohl diese im Normalbetrieb gar nicht genutzt werden.

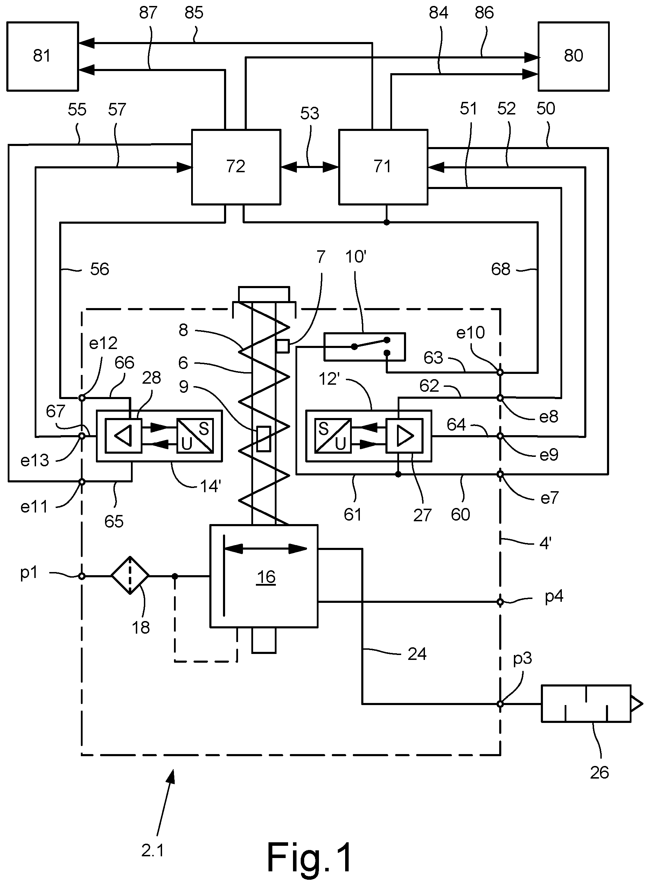

Demgegenüber ist bei der in der Figur 1 abgebildeten Ausfürhungsform von den Merkmalen der Erfindung aufweisenden Fussbremsmodul 2.1 vorgesehen, dass der dortige elektrische Schalter 10' jeweils berührungslos wirksam ist. Außerdem weist das Fussbremsmoduls 2.1 gemäß Fig. 1 zwei Wegsensoren 12', 14' auf, welche voneinander unabhängig von einem jeweils zugeordneten separaten Steuergerät 71, 72 mit elektrischer Spannung und Masse-Potential versorgt werden, und deren Sensormesswerte von diesen beiden Steuergeräten 71 ,72 jeweils separat empfangen und ausgewertet werden. Die beiden Steuergeräte 71, 72 teilen sich aber gegenseitig über eine Kommunikationsleitung 53 unter anderem die jeweils ermittelten Wegmesswerte mit, bilden daraus gegebenenfalls arithmetische Mittelwerte und nutzen diese zur Erzeugung von Steuerströmen für die mit den beiden Steuergeräten 71, 72 jeweils verbundenen Relaisventilen 80, 81 zur Einstellung von Bremsdrücken in den Bremskreisen eines Fahrzeugs. Hierzu sind in diesem Ausführungsbeispiel die beiden Steuergeräte 71, 72 über Steuerleitungen 84, 85; 86, 87 jeweils mit den beiden Relaisventilen 80, 81 verbunden.

Das in Fig. 1 dargestellte erfindungsgemäße Fußbremsmodul 2.1 weist einen ersten Eingangsanschluss e7 für eine elektrische Spannung auf, welche von dem ersten Steuergerät 71 über eine erste externe Spannungsversorgungsleitung 50 bereitgestellt wird. Diese elektrische Spannung gelangt von dem ersten Eingangsanschluss e7 über einen ersten internen Leitungszweig 60 zu der Auswerteelektronik 27 des ersten Wegsensors 12' sowie über einen zweiten internen Spannungs-Leitungszweig 61 zu dem Schalter 10'.

Zur Versorgung des ersten Wegsensors 12' mit dem elektrischen Masse-Potential ist an dem Fußbremsmodul 2.1 ein Eingangsanschluss e8 für das elektrische Masse-Potential vorhanden, an dem die Auswerteelektronik 27 über eine erste interne Masse-Potential-Leitung 62 angeschlossen ist. Das elektrische Masse-Potential wird über eine mit dem genannten Eingangsanschluss e8 verbundene zweite externe Spannungsversorgungsleitung 51 bereitgestellt, welche mit dem ersten Steuergerät 71 verbunden ist.

Außerdem ist der erste Wegsensor 12' über eine erste interne Wegsignalleitung 64 mit einem ersten Ausgangsanschluss e9 am Fußbremsmodul 2.1 verbunden, an welchen auch eine erste externe Wegsignalleitung 52 angeschlossen ist, die mit dem ersten Steuergerät 71 verbunden ist.

Das Fußbremsmodul 2.1 gemäß Fig. 1 weist im Unterschied zu dem bekannten Fußbremsmodul gemäß Fig. 3 einen zweiten Eingangsanschluss e11 für eine elektrische Spannung auf, welche von dem zweiten Steuergerät 72 über eine zweite externe Spannungsversorgungsleitung 55 bereitgestellt wird. Diese elektrische Spannung gelangt von dem genannten zweiten Eingangsanschluss e11 über einen dritten internen Leitungszweig 65 zu der Auswerteelektronik 28 des zweiten Wegsensors 14'.

Zur Versorgung des zweiten Wegsensors 14' mit dem Masse-Potential ist an dem Fußbremsmodul 2.1 ein zweiter Eingangsanschluss e12 für das elektrische Masse-Potential vorhanden, an dem die Auswerteelektronik 28 des zweiten Wegsensors 14' über eine dritte interne Masse-Potential-Leitung 66 angeschlossen ist. Das elektrische Masse-Potential wird über eine mit dem genannten Eingangsanschluss e12 verbundene vierte externe Spannungsversorgungsleitung 56 bereitgestellt, welche mit dem zweiten Steuergerät 71 verbunden ist.

Außerdem ist der zweite Wegsensor 14' über eine zweite interne Wegsignalleitung 67 mit einem zweiten Ausgangsanschluss e13 am Fußbremsmodul 2.1 verbunden, an welchen auch eine zweite externe Wegsignalleitung 57 angeschlossen ist, die mit dem zweiten Steuergerät 72 verbunden ist. Hierdurch ist für jeden der beiden Bremskreise eines Fahrzeugs eine autonome elektronische Steuerung bereitgestellt, mittels denen die Ausfallwahrscheinlichkeit der elektronischen Steuerung für beide Bremskreise deutlich reduziert ist.

Der Schalter 10' des Fußbremsmoduls 2.1 gemäß Fig. 1 ist mit seinem Ausgangskontakt über eine interne Schaltsignalleitung 63 an einem Ausgangsanschluss e10 für den Schalter 10' angeschlossen. Das dort anliegende Schaltersignal wird über eine an den Ausgangsanschluss e10 angeschlossene externe Schaltersignalleitung 68 dem ersten Steuergerät 71 und dem zweiten Steuergerät 72 zur Verfügung gestellt. Wegen der vorhandenen Kommunikationsleitung 53 zwischen den beiden Steuergeräten 71, 72 kann die externe Schaltsignalleitung 63 aber auch nur zu einem der beiden Steuergeräte 71, 72 geführt sein.

Der Schalter 10' des erfindungsgemäßen Fußbremsmoduls 2.1 gemäß Fig. 1 ist magentfeldsensitiv wirksam und kann wahlweise als ein Reed-Schalter oder als ein Hall-Sensor ausgebildet sein, dem als Signalgeber ein an dem Stößel 6 befestigter Permanentmagnet 7 zugeordnet ist.

Bei dem Fussbremsmodul 2.1 gemäß Fig. 1 sind neben dem elektrischen Schalter 10' die zwei elektronischen Wegsensoren 12', 14' sowie nur das erste pneumatische Bremssteuerventil 16 vorhanden. Die beiden Wegsensoren 12', 14' sind beiden Bremskreisen zugeordnet und arbeiten redundant zueinander. Sollte also einer dieser Wegsensoren 12', 14' ausfallen oder ein nicht plausibles Sensorsignal liefern, so kann dennoch das Bremssystem eines Fahrzeugs problemlos gesteuert werden.

Das einzige Bremssteuerventil 16 ist dem ersten Bremskreis zugeordnet, es kann aber auch beiden Bremskreisen eines Fahrzeugs zugeordnet sein.

Zudem kann die Steuerung des einen Bremskreises auf die pneumatische Steuerung über das vorhandene Bremssteuerventil 16 umgeschaltet werden, sofern dieses dem Bremskreis mit der ausgefallenen elektronischen Steuerung zugeordnet ist. Andernfalls kann das betreffende Fahrzeug über den anderen Bremskreis und dessen elektronische Steuerung noch sicher abgebremst werden.

Bei einem Ausfall der elektronischen Steuergeräte 71, 72 beider Bremskreise wird die pneumatische Steuerung des ersten Bremskreises aktiviert, sodass das betreffende Fahrzeug über diesen Bremskreis und dessen pneumatische Steuerung über das vorhandene Bremssteuerventil 16 noch sicher abgebremst werden kann. Durch das Weglassen des beim Stand der Technik vorgesehenen zweiten pneumatischen Bremssteuerventils 20 sind Material- und Herstellungskosten eingespart und aufgrund der reduzierten Bauhöhe des Gehäuses 4' die Abmessungen des Fussbremsmoduls 2.1 reduziert.

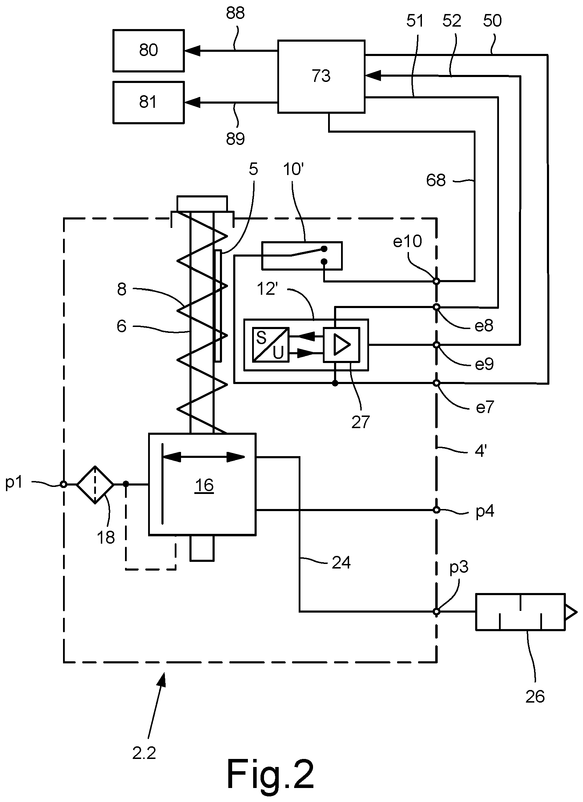

Bei dem nicht erfindungsgemäßen Fussbremsmodul 2.2 gemäß Fig. 2 sind neben dem elektrischen Schalter 10' nur der erste elektronische Wegsensor 12' und nur das erste pneumatische Bremssteuerventil 16 vorhanden. Dieses nicht erfindungsgemäße Fussbremsmodul 2.2 steht mit nur einem einzigen Steuergerät 73 über die erläuterten elektrischen Leitungen 50, 51, 52, 68 in Verbindung, und dieses dritte Steuergerät 73 ist über Steuerungsleitungen 88, 89 mit zugeordneten Relaisventilen 80, 81 von zwei Bremskreisen verbunden, um diesen bedarfsgerechte Steuerströme zur Einstellung von Bremsdrücken zuzuführen.

Der einzige Wegsensor 12' ist beiden Bremskreisen eines Fahrzeugs zugeordnet und das Bremssteuerventil 16 ist dem ersten Bremskreis zugeordnet. Bei einem Ausfall der elektronischen Steuerung beider Bremskreise wird die pneumatische Steuerung des ersten Bremskreises aktiviert, so dass das betreffende Fahrzeug über diesen Bremskreis sowie dessen pneumatische Steuerung über das vorhandene Bremssteuerventil 16 noch sicher abgebremst werden kann. Durch das Weglassen des zweiten elektronischen Wegsensors 14' und des zweiten pneumatischen Bremssteuerventils 20 sind Material- und Herstellungskosten eingespart und aufgrund der reduzierten Bauhöhe des Gehäuses 4' die Abmessungen des Fussbremsmoduls 2.3 verringert.

Bei dem Fussbremsmoduls 2.2 gemäß Fig. 2 ist außerdem vorgesehen, dass der elektrische Schalter 10' und der einzige Wegsensor 12' mittels nur eines einzigen Magneten 5 berührungslos betätigt werden, welcher an dem Stößel 6 befestigt ist. Hierdurch lassen sich die Herstellkosten des Fussbremsmoduls 2.2 weiter reduzieren.

### Bezugszeichenliste (Teil der Beschreibung)

- 2: Fussbremsmodul (Stand der Technik)
- 2.1: Fussbremsmodul (erste Ausführungsform gemäß der Erfindung)
- 2.2: Fussbremsmodul (zweite Ausführungsform gemäß der Erfindung)
- 2.3: Fussbremsmodul (dritte Ausführungsform gemäß der Erfindung)
- 4, 4': Gehäuse
- 5: Gemeinsamer Permanentmagnet
- 6: Stößel
- 7: Erster Permanentmagnet
- 8: Druckfeder, Schraubenfeder
- 9: Zweiter Permanentmagnet
- 10: Elektrischer Schalter (bekannt)
- 10': Elektrischer Schalter (gemäß Erfindung)
- 11: Betätigungsnocken am Stößel
- 12: Erster elektronischer Wegsensor (bekannt)
- 12': Erster elektronischer Wegsensor (gemäß Erfindung)
- 14: Zweiter elektronischer Wegsensor (bekannt)
- 14': Zweiter elektronischer Wegsensor (gemäß Erfindung)
- 16: Erstes pneumatisches Bremssteuerventil
- 18: Erstes Filterelement
- 20: Zweites pneumatisches Bremssteuerventil
- 22: Zweites Filterelement
- 24: Entlüftungsleitung
- 26: Schalldämpfer
- 27: Erste Auswertungselektronik
- 28: Zweite Auswertungselektronik
- 30: Erste externe Spannungsversorgungsleitung (Stand der Technik)
- 31: Erster interner Leitungszweig der Spannungsversorgung (Stand der Technik)
- 32: Zweiter interner Leitungszweig der Spannungsversorgung (Stand der Technik)
- 33: Dritter interner Leitungszweig der Spannungsversorgung (Stand der Technik)
- 34: Erste interne Schaltersignalleitung (Stand der Technik)
- 35: Zweite interne Schaltersignalleitung (Stand der Technik)
- 36: Erste Schaltersignalleitung (Stand der Technik)
- 37: Zweite Schaltersignalleitung (Stand der Technik)
- 38: Externe Masse-Potential-Leitung (Stand der Technik)
- 39: Erste interne Masse-Potential-Leitung (Stand der Technik)
- 40: Zweite interne Masse-Potential-Leitung (Stand der Technik)
- 41: Erste externe Wegsignalleitung (Stand der Technik)
- 42: Erste interne Wegsignalleitung (Stand der Technik)
- 43: Zweite externe Wegsignalleitung (Stand der Technik)
- 44: Zweite interne Wegsignalleitung (Stand der Technik)
- 50: Erste externe Spannungsversorgungsleitung
- 51: Erste externe Masse-Potential-Leitung
- 52: Erste externe Wegsignalleitung
- 53: Kommunikationsleitung
- 55: Zweite externe Spannungsversorgungsleitung
- 56: Zweite externe Masse-Potential-Leitung
- 57: Zweite externe Wegsignalleitung
- 60: Erster interner Leitungszweig der Spannungsversorgung
- 61: Zweiter interner Leitungszweig der Spannungsversorgung
- 62: Erste interne Masse-Potential-Leitung
- 63: Interne Schaltersignalleitung
- 64: Erste interne Wegsignalleitung
- 65: Dritter interner Leitungszweig der Spannungsversorgung
- 66: Zweite interne Masse-Potential-Leitung
- 67: Zweite interne Wegsignalleitung
- 68: Externe Schaltersignalleitung
- 70: Gemeinsames Steuergerät (Stand der Technik)
- 71: Erstes Steuergerät
- 72: Zweites Steuergerät
- 73: Drittes Steuergerät
- 80: Relaisventil eines ersten Bremskreises
- 81: Relaisventil eines zweiten Bremskreises
- 84: Steuerleitung vom Steuergerät 71 zum Relaisventil 80
- 85: Steuerleitung vom Steuergerät 71 zum Relaisventil 81
- 86: Steuerleitung vom Steuergerät 72 zum Relaisventil 80
- 87: Steuerleitung vom Steuergerät 72 zum Relaisventil 81
- 88: Steuerleitung vom Steuergerät 73 zum Relaisventil 80
- 89: Steuerleitung vom Steuergerät 73 zum Relaisventil 81
- e1: Eingangsanschluss Spannung für Schalter 10 und Wegsensoren 12, 14
- e2: Eingangsanschluss Masse-Potential für beide Wegsensoren 12, 14
- e3: Erster Schalterausgangsanschluss
- e4: Zweiter Schalterausgangsanschluss
- e5: Ausgangsanschluss für ersten Wegsensor 12
- e6: Ausgangsanschluss für zweiten Wegsensor 14
- e7: Eingangsanschluss Spannung für Schalter und ersten Wegsensor 12'
- e8: Eingangsanschluss Masse-Potential für ersten Wegsensor 12'
- e9: Ausgangsanschluss für ersten Wegsensor 12'
- e10: Ausgangsanschluss für Schalter 10'
- e11: Eingangsanschluss Spannung für zweiten Wegsensor 14'
- e12: Eingangsanschluss Masse-Potential für zweiten Wegsensor 14'
- e13: Ausgangsanschluss für zweiten Wegsensor 14'
- p1: Anschluss für Vorratsdruck (erster Bremskreis)
- p4: Anschluss für Bremssteuerdruck (erster Bremskreis)
- p2: Anschluss für Bremssteuerdruck (zweiter Bremskreis)
- p3: Entlüftungsausgang
- p5: Anschluss für Vorratsdruck (zweiter Bremskreis)
- S: Weg (gemessen mit Wegsensor)
- U: Elektrische Spannung (am Wegsensor)

## Patentansprüche

1. Fussbremsmodul (2.1, 2.2, 2.3) einer elektropneumatischen Bremsanlage eines Kraftfahrzeugs mit mindestens zwei pneumatischen Bremskreisen und einem Stößel (6), welches mittels eines Bremspedals betätigbar ist, und welches einen pneumatischen Teil mit einem pneumatischen Bremssteuerventil (16) sowie einen elektrischen Teil mit mindestens einem elektrischen Schalter (10') und wenigstens einem elektronischen Wegsensor (12', 14') aufweist, wobei der elektrische Schalter (10') berührungslos wirksam ist, und wobei das Fussbremsmodul (2.1) zwei Wegsensoren (12', 14') aufweist, wobei die zwei Wegsensoren (12', 14') jeweils eine separate Stromversorgung aufweisen sowie an unterschiedliche elektronische Steuergeräten (71, 72) angeschlossen sind, **dadurch gekennzeichnet, dass** der Schalter (10') und die zwei Wegsensoren (12', 14') mittels nur eines einzigen, gemeinsamen Permanentmagneten (5; 7) betätigbar sind, welcher an dem Stößel (6) befestigt ist.

2. Fussbremsmodul nach Anspruch 1, **dadurch gekennzeichnet, dass** der Schalter (10') magentfeldsensitiv wirksam ist.

3. Fussbremsmodul nach Anspruch 2, **dadurch gekennzeichnet, dass** der Schalter (10') als ein Reed-Schalter ausgebildet und diesem als Signalgeber ein unmittelbar oder mittelbar an dem mit dem Bremspedal in Stellverbindung befindlichen Stößel (6) befestigter einziger, gemeinsamer Permanentmagnet (5; 7) zugeordnet ist.

4. Fussbremsmodul nach Anspruch 2, **dadurch gekennzeichnet, dass** der Schalter (10') als ein Hall-Sensor ausgebildet und diesem als Signalgeber ein unmittelbar oder mittelbar an dem mit dem Bremspedal in Stellverbindung befindlichen Stößel (6) befestigter einziger, gemeinsamer Permanentmagnet (5; 7) zugeordnet ist.

5. Fussbremsmodul nach einem der Ansprüche 1 bis 4, **dadurch gekennzeichnet, dass** der zumindest eine Wegsensor (12', 14') von den zwei Wegsensoren (12', 14') als ein Hall-Sensor ausgebildet ist, dem als Signalgeber ein unmittelbar oder mittelbar an einem mit dem Bremspedal in Stellverbindung befindlichen Stößel (6) befestigter einziger, gemeinsamer Permanentmagnet (5; 7) zugeordnet ist.

6. Fussbremsmodul nach Anspruch 5, **dadurch gekennzeichnet, dass** auf einem Sensorchip des Wegsensors (12', 14') eine zugeordnete Auswertungselektronik (27, 28) angeordnet ist, in welcher der gemessene Messwert in ein digitales Datenübertragungssignal umwandelbar ist.

7. Fussbremsmodul nach einem der Ansprüche 1 bis 6, **dadurch gekennzeichnet, dass** in diesem außer einem elektrischen Schalter (10') zwei elektronische Wegsensoren (12', 14') sowie ein pneumatisches Bremssteuerventil (16) vorhanden sind, und dass die Sensorsignale der beiden elektronischen Wegsensoren (12', 14') nach deren Auswertung in dem jeweils zugeordneten Steuergerät (71, 72) zur Steuerung von mindestens einem pneumatischen Bremskreises nutzbar sind.

## Claims

1. Foot brake module (2.1, 2.2, 2.3) of an electropneumatic brake system of a motor vehicle, comprising at least two pneumatic brake circuits and a plunger (6), which foot brake module can be actuated by means of a brake pedal and which has a pneumatic portion having a pneumatic brake control valve (16) and an electrical portion having at least one electrical switch (10') and at least one electronic travel sensor (12', 14'), the electrical switch (10') acting in a contactless manner, and the foot brake module (2.1) having two travel sensors (12', 14'), the two travel sensors (12', 14') each having a separate power supply and being connected to different electronic control units (71, 72),**characterized in that** the switch (10') and the two travel sensors (12', 14') can only be actuated by means of a single, common permanent magnet (5; 7) which is attached to the plunger (6).

2. Foot brake module according to claim 1, **characterized in that** the switch (10') is sensitive to magnetic fields.

3. Foot brake module according to claim 2, **characterized in that** the switch (10') is designed as a reed switch, and a single, common permanent magnet (5; 7) attached directly or indirectly to the plunger (6) in actuating connection with the brake pedal is assigned to said switch as a signal generator.

4. Foot brake module according to claim 2, **characterized in that** the switch (10') is designed as a Hall sensor, and a single, common permanent magnet (5; 7) attached directly or indirectly to the plunger (6) in actuating connection with the brake pedal is assigned to said switch as a signal generator.

5. Foot brake module according to any of claims 1 to 4,
**characterized in that** the at least one travel sensor (12', 14') of the two travel sensors (12', 14') is designed as a Hall sensor, to which a single, common permanent magnet (5; 7) attached directly or indirectly to a plunger (6) in actuating connection with the brake pedal is assigned as a signal generator.

6. Foot brake module according to claim 5, **characterized in that,** on a sensor chip of the travel sensor (12', 14'), a corresponding evaluation electronics unit (27, 28) is arranged, in which the measured value can be converted into a digital data transmission signal.

7. Foot brake module according to any of claims 1 to 6,
**characterized in that,** in the foot brake module, in addition to an electrical switch (10'), there are two electronic travel sensors (12', 14') and a pneumatic brake control valve (16), **and in that,** after being evaluated, the sensor signals of the two electronic travel sensors (12', 14') can be used in the respectively assigned control unit (71, 72) to control at least one pneumatic brake circuit.

## Revendications

1. Module de frein à pied (2.1, 2.2, 2.3) d'une installation de frein électropneumatique d'un véhicule automobile comportant au moins deux circuits de frein pneumatiques et un poussoir (6), qui peut être actionné à l'aide d'une pédale de frein, et qui présente une partie pneumatique comportant une soupape de commande de frein (16) pneumatique ainsi qu'une partie électrique comportant au moins un commutateur (10') électrique et au moins un capteur de course (12', 14') électronique, dans lequel le commutateur (10') électrique est actif sans contact, et dans lequel le module de frein à pied (2.1) présente deux capteurs de course (12', 14'), dans lequel les deux capteurs de course (12', 14') présentent respectivement une alimentation en courant séparée et sont raccordés à des appareils de commande (71, 72) électroniques différents, **caractérisé en ce que** le commutateur (10') et les deux capteurs de course (12', 14') peuvent être actionnés à l'aide d'un aimant permanent (5 ; 7) unique commun qui est fixé sur le poussoir (6).

2. Module de frein à pied selon la revendication 1, **caractérisé en ce que** le commutateur (10') est actif en étant sensible au champ magnétique.

3. Module de frein à pied selon la revendication 2, **caractérisé en ce que** le commutateur (10') est conçu sous la forme d'un commutateur à lames et un aimant permanent (5 ; 7) unique commun, fixé directement ou indirectement sur le poussoir (6) se trouvant en liaison de réglage avec la pédale de frein, est associé à ce commutateur en tant que générateur de signaux.

4. Module de frein à pied selon la revendication 2, **caractérisé en ce que** le commutateur (10') est conçu sous la forme d'un capteur à effet Hall et un aimant permanent (5 ; 7) unique commun fixé directement ou indirectement sur le poussoir (6) se trouvant en liaison de réglage avec la pédale de frein, est associé à ce commutateur en tant que générateur de signaux.

5. Module de frein à pied selon l'une des revendications 1 à 4,
**caractérisé en ce que** l'au moins un capteur de course (12', 14') parmi les deux capteurs de course (12', 14') est conçu sous la forme d'un capteur à effet Hall et un aimant permanent (5 ; 7) unique commun fixé directement ou indirectement à un poussoir (6) se trouvant en liaison de réglage avec la pédale de frein, est associé à ce capteur en tant que générateur de signaux.

6. Module de frein à pied selon la revendication 5, **caractérisé en ce que** sur une puce de capteur du capteur de course (12', 14') est disposée une électronique d'évaluation (27, 28) associée, dans laquelle la valeur de mesure mesurée peut être convertie en un signal numérique de transmission de données.

7. Module de frein à pied selon l'une des revendications 1 à 6,
**caractérisé en ce que,** outre un commutateur (10') électrique, deux capteurs de course (12', 14') électroniques ainsi qu'une soupape de commande de frein (16) pneumatique sont disponibles dans ce module, et **en ce que** les signaux de capteur des deux capteurs de course (12', 14') électroniques peuvent être utilisés, après leur évaluation dans l'appareil de commande (71, 72) respectivement associé, pour la commande d'au moins un circuit de frein pneumatique.
